# FASCICULE DE BREVET EUROPEEN

(11) **EP 0 515 427 B1**
(45) Date de publication et mention de la délivrance du brevet: **15.12.1993**
(21) Numéro de dépôt: 91903412.4
(22) Date de dépôt: 01.02.1991
(51) Int. Cl.: F02B 41/04, F16H 21/28, F01B 9/02

(54) **SYSTEME PERMETTANT DE REALISER LE CYCLE A QUATRE TEMPS D'UN MOTEUR A COMBUSTION INTERNE SUR UN SEUL TOUR DE VILEBREQUIN**
SYSTEM ZUM ERREICHEN EINES VIERTAKTZYKLUS MIT EINER UMDREHUNG DER KURBELWELLE IN EINER BRENNKRAFTMASCHINE
SYSTEM FOR ACHIEVING A FOUR-STROKE CYCLE WITH A SINGLE ROTATION OF THE CRANKSHAFT IN AN INTERNAL COMBUSTION ENGINE

(30) Priorité: 12.02.1990 FR 9001608
(43) Date de publication de la demande: 02.12.1992
(73) Titulaire: PAQUOLA, Louis, F-08130 Attigny (FR)
(72) Inventeur: PAQUOLA, Louis, F-08130 Attigny (FR)
(74) Mandataire: Gérardin, Robert Jean René
(86) Numéro de dépôt international: FR9100069
(87) Numéro de publication internationale: WO9112420

(56) Documents cités:
- DE-A- 315 250
- FR-A- 757 262
- FR-A- 847 542
- FR-A- 977 781
- FR-A- 1 087 236
- FR-A- 1 111 462
- GB-A- 581 575

## Description

L'invention concerne un système permettant d'obtenir, sur un moteur à combustion interne à quatre temps, la réalisation du cycle sur un seul tour de vilebrequin.

Sur les moteurs à combustion interne à quatre temps notamment, la réalisation du cycle s'effectue sur deux tours de vilebrequin par l'intermédiaire du traditionnel système bielle-manivelle qui exige un aller et retour du piston pour obtenir la rotation sur un seul tour du vilebrequin.

Il résulte de cette situation des irrégularités du couple transmis et des efforts d'inertie parasites perturbant l'équilibrage du moteur.

Une réduction de rapport 0,5 doit être introduite dans la transmission de la rotation du vilebrequin aux arbres à cames assurant la distribution, ce qui complique la cinématique du moteur et fragilise celui-ci.

Pour une cylindrée déterminée, la puissance fournie est limitée par les efforts d'inertie maximums susceptibles d'être supportés par les pistons.

Par ailleurs, cette recherche d'augmentation de la puissance massique par accroissement de la vitesse de rotation du vilebrequin nécessite l'interposition d'un dispositif de réduction important, compte-tenu des vitesses de rotation à transmettre aux roues, et entraîne une usure très rapide des ensembles cylindre-pistons.

Les moteurs rapides exigent une surveillance étroite et permanente du nombre de tours de vilebrequin, compte-tenu du fait que, comme nous l'avons évoqué plus haut, l'ensemble bielle-pistons est, aux régimes élevés, au voisinage de la limite de rupture, puisque la recherche de puissance est obtenue à ce prix.

On connaît déjà un dispositif permettant d'obtenir, sur un moteur à quatre temps, la réalisation du cycle sur un seul tour de vilebrequin (demande de brevet français n° 2.622.251). Ce dispositif, qui a pour but d'augmenter le rendement des moteurs à combustion interne et d'en simplifier la construction, se caractérise principalement en ce qu'il comporte une bielle orbitale, montée sur le maneton oblique d'un vilebrequin, reliée au piston par l'intermédiaire d'une bielle auxiliaire. Le fonctionnement de ce système exige le remplacement de l'axe de rotation classique, reliant le piston à la bielle, par une rotule permettant le déplacement orbitale de la bielle auxiliaire ; ce qui complique la construction, fragilise la liaison bielle-pistons et génère des poussées axiales cycliques importantes sur le vilebrequin susceptibles de provoquer des vibrations préjudiciables à la tenue des paliers de vilebrequin.

La présente invention a pour but de remédier à ces inconvénients. Cette invention, telle qu'elle est caractérisée dans les revendications, résout le problème consistant à créer un nouveau système de transformation du déplacement linéaire des pistons d'un moteur à combustion interne en rotation d'un arbre, permettant de faire correspondre deux allers et retours d'un piston à un seul tour de l'arbre.

Les avantages obtenus grâce à cette invention consistent essentiellement en ceci qu'elle permet, sur un moteur à combustion interne à quatre temps, la réalisation complète du cycle correspondant en un seul tour de vilebrequin, ce qui offre la possibilité d'obtenir des puissances massiques élevées, pour des vitesses de rotation restant très en deçà de celles maximums permises par les caractéristiques mécaniques des pièces en mouvement et tout particulièrement des pistons. Les rendements seront, par ailleurs, améliorés, du fait d'une meilleure évacuation des gaz brulés, d'un meilleur remplissage et d'une meilleure combustion, du fait d'un quasi doublement du temps représenté par chacune de ces opérations, ceci pour une même vitesse de rotation du vilebrequin. Par ailleurs, la possibilité de faire varier la distance D de l'axe d'articulation de la glissière par rapport à la base du cylindre permet de modifier le rapport volumétrique de compression pour adapter le moteur à des utilisations particulières n'excluant pas l'auto-allumage (diesel) ni l'asservissement de ce réglage à d'autres paramètres de fonctionnement du moteur.

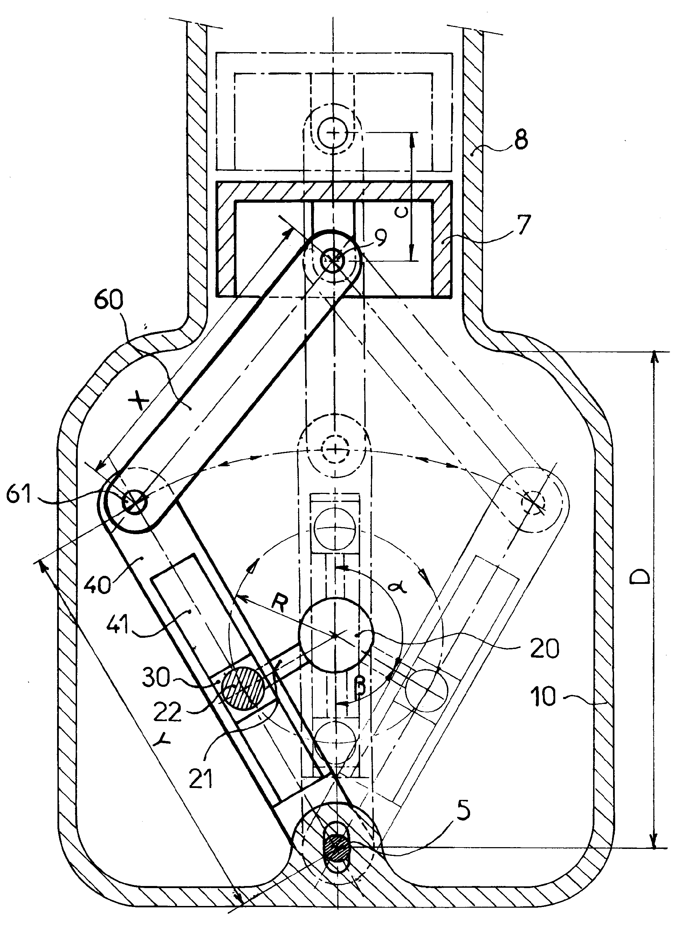

D'autres caractéristiques et avantages apparaîtront dans la description qui va suivre d'un système bielle-glissière-coulisseau-manivelle pour moteur à quatre temps, réalisé selon l'invention, donné à titre d'exemple non limitatif, au regard du dessin annexé, représentant une vue en coupe transversale d'un moteur à combustion interne à quatre temps, équipé du système selon l'invention.

Comme on le voit en examinant en détail cette figure, le vilebrequin **20**, situé dans le carter **10**, est relié au piston 7, introduit dans le cylindre **8**, par l'intermédiaire d'une manivelle **21** à maneton **22** monté libre en rotation dans le coulisseau **30** d'une glissière **40** articulée par rapport à un axe **5** solidaire du carter **10**, ou d'une traverse solidaire du bloc moteur, et par rapport à l'extrémité **61** d'une biellette **60**, elle-même articulée par rapport au piston **7** par l'intermédiaire d'un axe **9**. Le coulisseau **30** est solidarisé à la glissière **40** par l'intermédiaire d'une rainure **41**.

Ainsi, lorsque le piston **7** se déplace vers le bas, il provoque un décalage angulaire progressif de la glissière **40**, qui entraîne, par l'intermédiaire du coulisseau **30**, du maneton **22** et de la manivelle **21** de Rayon R, une rotation du vilebrequin **20**.

Sous réserve que la longueur X de la biellette **60** et celle Y de la glissière **40** aient été déterminées conjointement au préalable pour que, lorsque le piston **7** est au point mort bas, la manivelle **21** forme un angle droit avec la glissière articulée **40**, le vilebrequin effectue, pendant la course C du piston **7** vers le bas, une rotation d'angle obtu alpha.

Cette rotation du vilebrequin **20** se poursuit par inertie, selon un angle béta de 180° - alpha, lorsque le piston **7** effectue une course C pour rejoindre le point mort haut.

Comme on le voit, le vilebrequin a alors tourné d'un demi-tour, alors que le piston a effectué un aller et un retour.

On imagine aisément que, par symétrie et par effet d'inertie, lorsque le piston **7** effectue un second aller et retour, le vilebrequin effectue, tout d'abord, une rotation d'angle béta lors de la course descendante du piston, puis un angle alpha complémentaire lors de la course remontante.

Lorsque les deux allers et retours du piston **7** ont été effectués sur la course C, le vilebrequin a bien alors tourné de 360°, soit d'un tour complet. Les quatre temps du cycle Beau De Rochas sont donc bien réalisés sur un seul tour du vilebrequin.

Les mêmes explications pourraient être données pour un cycle à deux temps qui s'effectuerait, en conséquence, sur un demi-tour.

L'invention s'applique principalement aux combustions internes à quatre ou deux temps, mais des applications intéressantes peuvent être envisagées sur les compresseurs et les pompes.

## Revendications

1. Système permettant d'obtenir, sur un moteur à combustion interne, deux allers et retours du piston pour un tour de vilebrequin, caractérisé en ce qu'il est constitué d'une manivelle (**21**), dont le maneton (**22**) est monté libre en rotation dans le coulisseau (**30**) d'une glissière (**40**), articulée par rapport à un axe (**5**), situé dans le plan de symétrie longitudinal dudit moteur, solidaire du fond du carter moteur (**10**) ou d'une traverse, et par rapport à l'extrémité (**61**) d'une biellette (**60**), elle-même articulée par rapport à l'axe (**9**) du piston (**7**) se déplaçant dans un cylindre (**8**), selon une course prédéterminée, et en ce que, pour un rayon (**R**) de manivelle (**21**) fixé, la longueur (**X**) de la biellette (**60**) et la longueur (**Y**) de la glissière (**40**) sont déterminées de façon que lors d'un déplacement correspondant à la course (**C**) vers le bas du piston (**7**), le vilebrequin (**20**) effectue une rotation d'angle obtu (α), amenant la manivelle (**21**) dans une position perpendiculaire à la glissière articulée (**40**).

2. Système selon la revendication 1, caractérisé en ce que le coulisseau (**30**) est solidarisé à la glissière articulée (**40**) par l'intermédiaire d'une rainure (**41**).

3. Système selon la revendication 1, caractérisé en ce que la distance (**D**) de l'axe (**5**) d'articulation de la glissière (**40**) par rapport à la base du cylindre (**8**) est réglable.

## Patentansprüche

1. System für einen Verbrennungsmotor, welches zwei Kolbenhübe bei einer Umdrehung der Kurbelwelle ermöglicht, **da****durch gekennzeichnet, daß** es aus einer Kurbel (21) gebildet ist, deren Zapfen (22) frei drehbar an einem Führungsschlitten (30) einer Laufschiene (40) montiert ist, die bezüglich einer in der Längssymmetrieebene des Motors gelegenen Achse (5) beweglich ist, welche mit dem Boden des Motorgehäuses (10) oder über eine Traverse verbunden ist, und bezüglich dem Ende (61) eines Schwingarmes (60), der selbst bezüglich einer Achse (9) eines in einem Zylinder (8) verschieblichen Kolbens (7) gemäß einem vorbestimmten Weg beweglich ist, und dadurch, daß durch einen festgelegten Radius (R) der festen Kurbel (21) die Länge (X) des Schwingarmes (60) und die Länge (Y) der Laufschiene (40) bestimmt sind, derart, daß bei einer Verschiebung entsprechend einem Weg (C) in Richtung des unteren Teils des Kolbens (7) die Kurbelwelle (20) eine Drehung um einen stumpfen Winkel (α) bewirkt, so daß die Kurbel (21) in eine Position senkrecht zur beweglichen Laufschiene (40) geführt wird.

2. System nach Anspruch 1, **dadurch gekennzeichnet, daß** der Führungsschlitten (30) mit der beweglichen Laufschiene (40) über einen Einschnitt (41) verbunden ist.

3. System nach Anspruch 1, **dadurch gekennzeichnet, daß** der Abstand (D) der Achse (5) zur Bewegung der Laufschiene (40) bezüglich der Basis des Zylinders (8) einstellbar ist.

## Claims

1. System making it possible to obtain, in an internal combustion engine, two up-and-down strokes of the piston for one revolution of the crankshaft, characterized in that it consists of a crank (21), the crankpin (22) of which is mounted so as to rotate freely in the sliding block (30) of a guide link (40) articulated with respect to a pin (5), located in the longitudinal plane of symmetry of the said engine, attached to the bottom of the engine casing (10) or to a cross-member, and with respect to the end (61) of a connecting rod (60) which is itself articulated with respect to the pin (9) of the piston (7) moving in a cylinder (8), with a predetermined travel, and in that, for a fixed radius (R) of the crank (21), the length (X) of the connecting rod (60) and the length (Y) of the guide link (40) are determined so that, during a movement corresponding to the downward travel (C) of the piston (7), the crankshaft (20) rotates through an obtuse angle (α), bringing the crank (21) into a position perpendicular to the articulated guide link (40).

2. System according to Claim 1, characterized in that the sliding block (30) is attached to the articulated guide link (40) by means of a slot (41).

3. System according to Claim 1, characterized in that the distance (D) from the articulation pin (5) of the guide link (40) to the base of the cylinder (8) can be adjusted.
